# EUROPEAN PATENT SPECIFICATION

(11) **EP 3 115 295 B1**
(45) Date of publication and mention of the grant of the patent: **31.03.2021**
(21) Application number: 16175365.2
(22) Date of filing: 20.06.2016
(51) Int. Cl.: B64C 27/00

(54) **ACCURATE OBJECT DETECTION IN FREE SPACE USING CONTROLLED LIGHT SOURCE TECHNIQUES**
GENAUE OBJEKTERKENNUNG IN FREIRAUM MIT GESTEUERTEN LICHTQUELLENTECHNIKEN
DÉTECTION D'OBJET PRÉCISE DANS L'ESPACE LIBRE À L'AIDE DE TECHNIQUES DE SOURCE DE LUMIÈRE COMMANDÉE

(30) Priority: 08.07.2015 US 201514793849
(43) Date of publication of application: 11.01.2017
(73) Proprietor: Honeywell International Inc., Morris Plains, NJ 07950 (US)
(72) Inventor: FRITZ, Bernard, Morris Plains, NJ 07950 (US); VECHART, Andrew Peter, Morris Plains, NJ 07950 (US); DIETRICH, Paul Frederick, Morris Plains, NJ 07950 (US); OLSON, Rich, Morris Plains, NJ 07950 (US)
(74) Representative: Houghton, Mark Phillip

(56) References cited:
- EP-A2- 1 148 321
- WO-A2-2011/009459
- GB-A- 1 116 748
- US-A- 2 455 053
- US-A- 2 964 849
- US-A- 3 012 468

## Description

### TECHNICAL FIELD

Embodiments of the subject matter described herein relate generally to object detection in free space and, more particularly, to implementing controlled light source techniques in rotorcraft blade tracking.

### BACKGROUND

Rotorcraft blade tracking is generally considered a mid-range application of object detection in free space. Rotorcraft blade tracking is typically employed in rotorcraft design to monitor a rotorcraft's balance, reduce noise, and reduce excess vibration throughout the rotorcraft frame; in turn, rotorcraft blade tracking reduces wear, tear, and erosion of rotorcraft components. Two locations on the rotorcraft are typically referenced in rotorcraft blade tracking systems: a location for a rotorcraft blade tracking system, and a location of a target (typically on a rotorcraft blade) of the blade tracking system. Because rotorcraft sizes and configurations vary, there is a corresponding range of distances between these two locations.

Patent document number GB1116748A describes an arrangement on a helicopter for observing or measuring the position of its rotor blades.

Patent document number US2964849A describes an optical tracking system for a rotary blade aircraft in flight.

Patent document number US3012468A describes apparatus for dynamic optical sensing of nonalignment of rotating bodies.

Patent document number WO2011/009459A2 describes a device for detection of ice on airfoils.

Blade tracking systems are typically passive optic systems, which record the time when the shadow of a rotorcraft blade passes over designated collection optics. As may be readily appreciated, passive optic systems often suffer from inconsistent operation in response to various external factors. First, varying environmental conditions may affect the shadows of rotorcraft blades. Another external factor is the variation in the condition of the rotorcraft blades themselves. Additionally, passive optic blade tracking systems tend to have difficulty achieving consistent signal return over the typical range of distances that a current rotorcraft designs present. Inconsistent operation translates into poor performance.

Accordingly, an improved rotorcraft blade tracking system and method is desirable. The desired blade tracking system and method employs a controlled light source and projects a focused, beam, having minimal variance in beam diameter over the range of distances suitable for rotorcraft blade tracking applications. The desired system and method maintains eye safety, and operates consistently over a variety of external factors. The present invention provides the desired features.

### BRIEF SUMMARY

The present invention in its various aspects is as presented in the appended claims.

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

A blade tracking system for a rotorcraft is provided. The system comprises: a light source mounted on the rotorcraft and configured to generate a projected beam of light sufficient to impinge on a target on a blade of the rotorcraft, the target separated by a predetermined distance from the light source; an optical assembly coupled to the light source, and oriented to (i) direct the projected beam of light toward the target and (ii) focus the projected beam of light, such that the projected beam of light provides predetermined spectral characteristics along a predetermined range of distances; and a detector coupled to the light source and the optical assembly and configured to detect from the target, a reflected beam of light associated with the projected beam of light.

Another blade tracking system for a rotorcraft is provided. The blade tracking system comprises: a light source mounted on the rotorcraft and configured to generate a projected beam of light; an optical assembly coupled to the light source and oriented to (i) direct the projected beam of light such that it impinges on a target located on a blade of the rotorcraft, (ii) focus the projected beam of light, such that the projected beam of light comprises at least one predetermined spectral characteristic from the set of: (i) predetermined wavelength, (ii) predetermined spatial extent, (iii) predetermined aperture, and (iv) predetermined divergence along a predetermined range of distances; and a detector coupled to the optical assembly and the light source, the detector oriented to detect, from the target, a reflected beam of light associated with the projected beam of light.

Other desirable features will become apparent from the following detailed description and the appended claims, taken in conjunction with the accompanying drawings and this background.

### BRIEF DESCRIPTION OF THE DRAWINGS

A more complete understanding of the subject matter may be derived by referring to the following Detailed Description and Claims when considered in conjunction with the following figures, wherein like reference numerals refer to similar elements throughout the figures, and wherein:
FIG. 1 is a simplified diagram of a rotorcraft employing a light beam blade tracking system, in accordance with an exemplary embodiment;
FIG. 2 is a block diagram of a light beam blade tracking system, in accordance with an exemplary embodiment;
FIG. 3 is an illustration showing additional detail of the light beam blade tracking system of FIG. 2, in accordance with an exemplary embodiment;
FIG. 4 is an illustration showing additional detail of the light beam blade tracking system of FIG. 2, in accordance with another exemplary embodiment;
FIG. 5 is an illustration showing additional detail of the light beam blade tracking system of FIG. 2, in accordance with yet another exemplary embodiment;
FIG. 6 is an intensity profile comparison of exemplary embodiments at 5 meters, without and with an axicon;
FIG. 7 is an intensity profile comparison of exemplary embodiments at 10 meters, without and with an axicon; and
FIG. 8 is an intensity profile comparison of exemplary embodiments at 12 meters, without and with an axicon.

### DETAILED DESCRIPTION

The following Detailed Description is merely exemplary in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over any other implementations. Furthermore, there is no intention to be bound by any expressed or implied theory presented in the preceding Technical Field, Background, Brief Summary or the following Detailed Description. Additionally, the connecting lines shown in the various figures contained herein are intended to represent exemplary functional relationships and/or physical couplings between the various elements. It should be noted that many alternative or additional functional relationships or physical connections may be present in an embodiment of the subject matter.

Techniques and technologies may be described herein in terms of functional and/or logical block components and with reference to symbolic representations of operations, processing tasks, and functions that may be performed by various computing components or devices. It should be appreciated that various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

Mechanisms to control components such as the source of laser light **202** and/or detector **216** may be electrical and/or mechanical, and may utilize processors and memory. Such operations, tasks, and functions are sometimes referred to as being processor-executed, computer-executed, computerized, software-implemented, or computer-implemented. In practice, one or more processor devices can carry out the described operations, tasks, and functions by manipulating electrical signals representing data bits at memory locations in the processor electronics of the display system, as well as other processing of signals. The memory locations where data bits are maintained are physical locations that have particular electrical, magnetic, optical, or organic properties corresponding to the data bits.

The following descriptions may refer to elements, nodes or features being "coupled" together. As used herein, and consistent with the discussion hereinabove, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

The embodiments described herein are merely examples and serve as guides for implementing the novel methods and systems in any avionics, astronautics, terrestrial, or water application. As used herein, an "a beam of light" comprises predetermined spectral characteristics such as, one or more predetermined wavelengths of light having a predetermined divergence (angular divergence of the beam of light as it extends from the source), predetermined aperture (maximum diameter of the beam of light), and a predetermined spatial extent (area) at a spot where the beam of light impinges on a target. Each of the below described embodiments employ a controlled, focused, light source to consistently produce the predetermined spectral characteristics along a predetermined range of distances. The examples presented herein are intended as non-limiting.

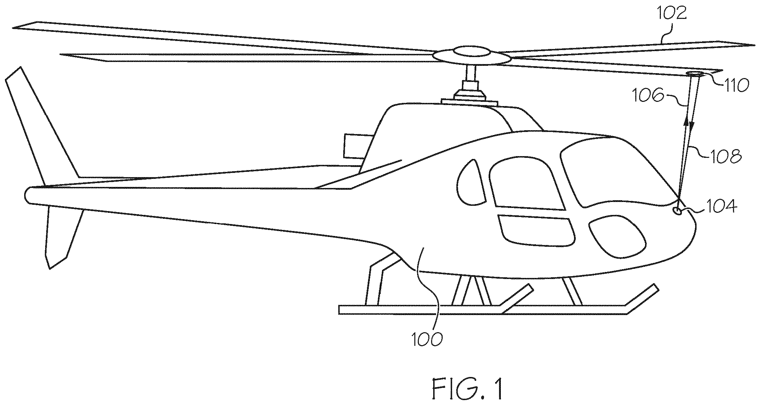

FIG. 1 is a simplified diagram of a rotorcraft **100** employing a light beam blade tracking system **104** according to an exemplary embodiment. While the light beam blade tracking system **104** is shown mounted to rotorcraft **100,** and target **110** is shown as an area on blade **102** of rotorcraft **100,** it is readily appreciated that the methods and systems described herein may be employed in non-rotorcraft applications without deviating from the scope of the invention. Various embodiments of the light beam blade tracking system **104** are described as follows.

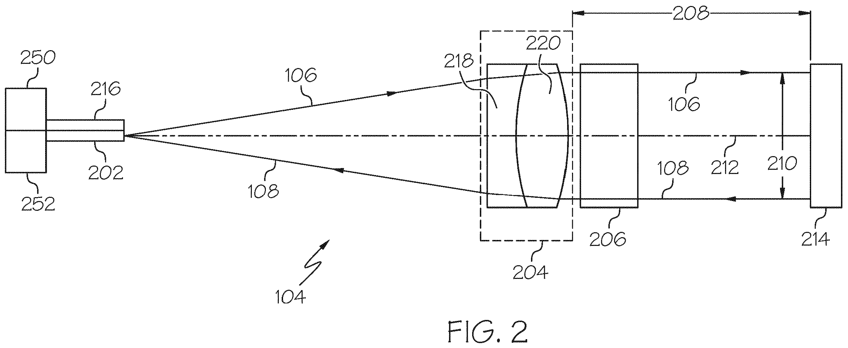

A laser light source (such as FIG. 2, source of laser light **202)** generates a projected beam of light **106** sufficient to impinge on a target located within a predetermined range of distances from the light source. Various laser light sources, such as lasers, single mode optical fiber, multi-mode optical fiber, laser diodes, pinholes, or the like, may be utilized for the light source. In an embodiment, a laser diode may be coupled to an optical fiber, and the two elements may function as one light source. The output laser light may be unpolarized or polarized.

In an embodiment, the laser light source is selected and/or adjusted to ensure that the projected beam of light **106** has required spectral characteristics and content, such as a predetermined focal length and predetermined intensity profile (for example a Gaussian profile), at a "spot" having a predetermined diameter and consistently provided along a predetermined range of distances from the light beam blade tracking system. The predetermined range of distances is selected from a range of distances suitable for rotorcraft blade tracking applications, as described above; in some embodiments, the predetermined range of distances is from about 4 meters to about 12 meters.

Rotorcraft blade **102** includes target **110.** Projected beam of light **106** impinges on a location on target **110.** Target **110** responds to the impingement of projected beam of light **106** by reflecting light associated with the projected beam of light **106** back toward the light beam blade tracking system **104.** Herein, the reflected light is referred to as the reflected beam of light **108.** The reflected beam of light **108** may or may not comprise substantially the same spectral content as the projected beam of light **106.** Wavelengths of ambient light and sunlight also directly or indirectly strike the light beam blade tracking system **104.** The light beam blade tracking system **104** advantageously employs devices and methods to detect the reflected beam of light **108** from among wavelengths of sunlight and/or wavelengths of ambient light. Details of the projection and detection methods and mechanisms are described in more detail in connection with FIGS 2-5.

FIG. 2 is a block diagram of a light beam blade tracking system **104,** in accordance with an exemplary embodiment. FIG. 2 is not to scale but provides a visual appreciation for the relative position and orientation of components and features according to an embodiment. Source of laser light **202** and optical assembly **204** are each located and configured at a distance **208** from target **214.** Source of laser light **202** generates projected beam of light **106.** Optical assembly **204** is oriented to direct and focus projected beam of light **106,** such that it provides predetermine spectral characteristics at a predetermined range of distances. The processor **250** may control aspects of the configuration of the source of laser light **202** and/or generation of the projected beam of light **106.**

In accordance with the invention, the cooperation of the source of laser light **202** and optical assembly **204** produce the projected beam of light **106,** having the required focal length, forming (at the target **214**) a "spot" with the required spectral characteristics, such as predetermined spectral content, a predetermined intensity profile, and a predetermined diameter **210.** The spot size is related to spatial resolution and range of distance between the source of the projection and the target. In some embodiments, the predetermined diameter may be between two to five millimeters. The light beam blade tracking system **104** consistently produces the spot with the required predetermined spectral characteristics along a predetermined range of distances **208** (from optical assembly **204** to the target **214**); this predetermined range of distances **208** may be from about four to about twelve meters (this range may be called mid-range in comparison to other object detection methods), and is a suitable range for rotorcraft blade detection.

The projected beam of light **106** has the predetermined spectral characteristics at the location where it impinges on the target **214.** In response to the impingement of the projected beam of light **106,** target **214** scatters some amount of the projected beam of light **106,** and the target **214** reflects at least some of the spectral content of the projected beam of light **106** back through the optical assembly **204,** and ultimately toward the detector **216,** this reflected light is referred to herein as the reflected beam of light **108.** While projected beam of light **106** and reflected beam of light **108** are each shown in FIGS 2-5 as a discrete beam in two dimensions, it is readily appreciated that, in practice, they each may be three dimensional, exhibit divergences, and each may comprise a single wavelength of light or a narrow band of wavelengths of light.

Generally, the detector **216** generally receives and detects wavelengths of light; specifically, the detector **216** is configured to detect/distinguish, from among other wavelengths of light, such as unwanted solar and ambient light, the reflected beam of light 108 associated with the projected beam of light **106.**

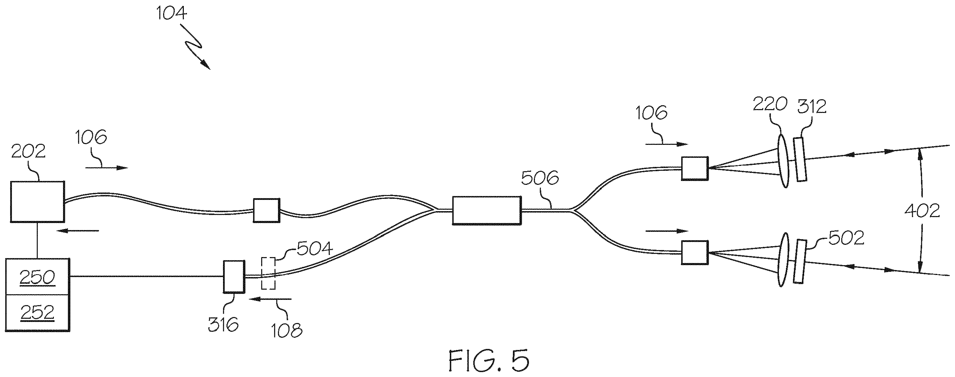

Distinguishing the reflected beam of light **108** may require removing unwanted wavelengths of light, such as solar light and ambient light. To do so, one or more application-specific bandpass filters **206** may be employed. In an embodiment, the pass frequency of a bandpass filter **206** is chosen to pass (or match) the wavelengths of reflected beam of light **108.** In an embodiment, wavelengths of light not matching the wavelengths of reflected beam of light **108** are blocked or filtered out by the bandpass filter **206.** Bandpass filters **206** may be chosen to pass a single wavelength, or a narrow band of wavelengths, consistent with the wavelengths of the reflected beam of light **108.** Operationally, bandpass filters **206** may be located at several different locations within the light beam blade tracking system **104;** in one embodiment, bandpass filter **206** is coupled to the detector **216.** It is contemplated that bandpass filters **206** may also be configured at other locations within the light beam blade tracking system **104** (for example, see FIG. 5).

The source of laser light **202** and the detector **216** are each coupled to a processor **250** and memory **252.** The processor **250** and memory **252** may coordinate to (i) control the source of laser light **202,** (ii) process data from the source of laser light **202** and the detector **216,** such as relational information between the projected beam of light **106** and the reflected beam of light **108,** and (iii) generate and receive system commands to and from the rotorcraft **100,** in response to at least the relational information.

The processor **250** may be implemented or realized with at least one general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. The processor **250** may be realized as an onboard component of a vehicle (e.g., an onboard management system, central maintenance computer, a rotorcraft control system, health and usage monitoring systems (HUMS) or the like), or it may be realized in a portable computing device that is carried onboard the vehicle.

The memory **252** can be realized as RAM memory, flash memory, EPROM memory, EEPROM memory, registers, a hard disk, a removable disk, a CD-ROM, or any other form of storage medium known in the art. In this regard, the memory can be coupled to the processor such that the processor can read information from, and write information to, the memory. In the alternative, memory may be integral to the on-board processor **250.** In practice, a functional or logical module/component of the system described here might be realized using program code that is maintained in the memory, or in separately located memory. Moreover, the memory can be used to store data utilized to support the operation of the system, as will become apparent from the following description.

The optical assembly **204** may comprise a first focusing lens **220** and one or more optional lenses **218.** The first focusing lens **220** and any optional lenses **218** are selected to cooperate in the capture, redirection, and focusing of the projected beam of light **106,** toward the target **214.** The size, thickness, and attributes of the components of the optical assembly **204** are selected as appropriate for a desired application.

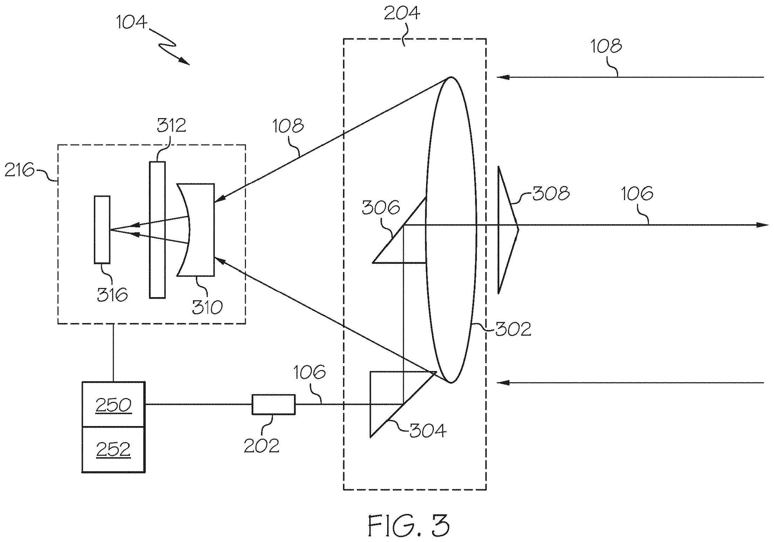

The source of laser light **202** and optical assembly **204** is application specific and chosen to ensure that the projected beam of light **106** comprises the required predetermined spectral characteristics along the predetermined range of distances. Various embodiments of the optical assembly **204** are contemplated. In an embodiment described in further detail in connection with FIG. 3, the first focusing lens **220** comprises a collimating lens.

FIG. 3 is an illustration showing additional detail of the light beam blade tracking system **104** of FIG. 2, in accordance with an exemplary embodiment. FIG. 3 is not to scale but provides a visual appreciation for the relative position and orientation of components and features according to the embodiment. Detector **216** comprises lens **310,** and bandpass filter **312,** each configured to coordinate in directing reflected beam of light **108** toward detector element **316.**

A first folding element **306** and a second folding element **304** are each coupled to the source of laser light **202** and a first lens **302** that is a collimating lens. The first folding element **306** and second folding element **304** may be any mirror or optical device suitable for cooperating in redirecting the projected beam of light **106** from the source of laser light **202,** through the collimating first lens **302,** and toward the target **214** (not shown).

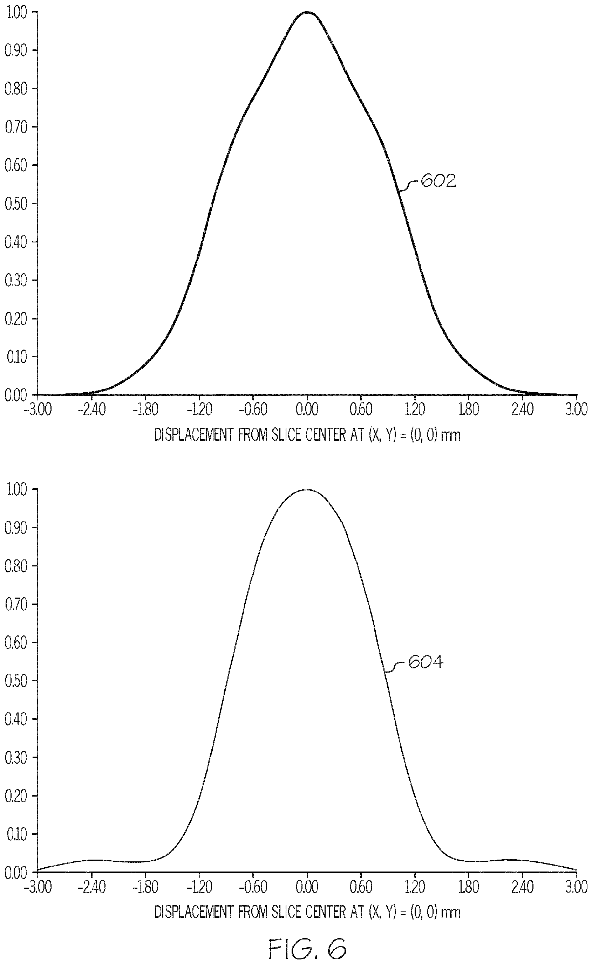

An axicon, also referred to as a rotationally symmetric prism, generally looks like a cone. An axicon is technically a lens having one piano surface and one conical surface. An axicon clarifies or focuses the intensity profile of the projected beam of light at the spot (FIGS 6-8 provide intensity profiles for comparison). Axicon **308** may be any commercially available rotationally symmetric prism. Axicon **308** is coupled to, and cooperates with, the collimating first lens **302** to direct and focus the projected beam of light **106** to a focal length coincident with the target **214** (not shown), creating the above described spot meeting the requirements of the specific application.

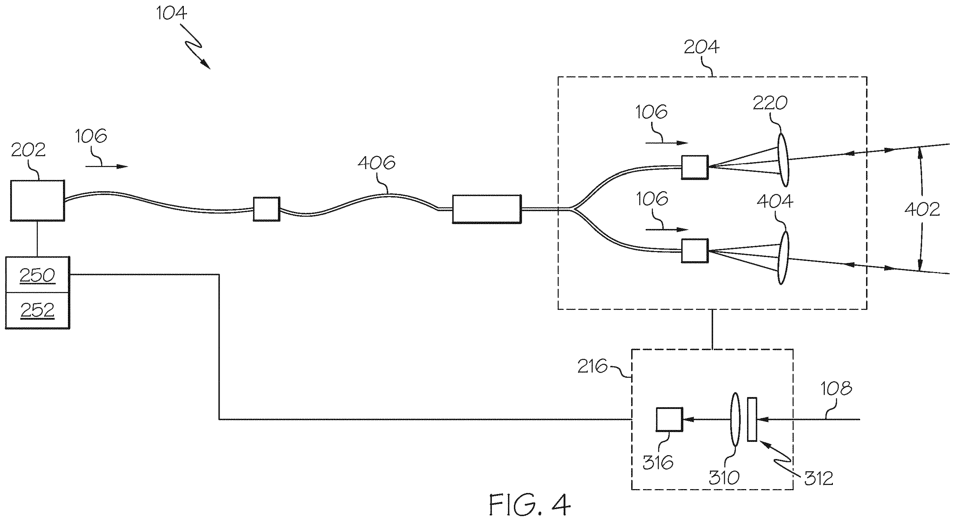

FIG. 4 is an illustration showing additional detail of the light beam blade tracking system **104** of FIG. 2, in accordance with another exemplary embodiment. FIG. 4 is not to scale but provides a visual appreciation for the relative position and orientation of components and features according to the embodiment. Source of laser light **202** is depicted as a laser diode connected via an optional 50/50 fiber coupler **406** to a first focusing lens **220** and an optional second focusing lens **404** that forms a timing gate. The first focusing lens **220** and second focusing lens **404** are oriented to tilt away from each other such that their axis define angle **402.** Angle **402** is variable, and chosen to optimize light beam blade tracking system **104** to a desired application. In an embodiment, angle **402** may extend from about 5 degrees to about 20 degrees. In FIG. 4, detector **216** comprises lens **310** and bandpass filter **312,** each configured to coordinate in directing reflected beam of light **108** toward detector element **316,** as described hereinabove. This embodiment is referred to as a non-coaxial form (projecting leg and detecting leg are non-coaxial) with a timing gate.

FIG. 5 is an illustration showing additional detail of the light beam blade tracking system **104** of FIG. 2, in accordance with yet another exemplary embodiment. FIG. 5 is not to scale but provides a visual appreciation for the relative position and orientation of components and features according to the embodiment. FIG. 5 shares the simple non-coaxial form and timing gate with FIG 4. In FIG. 5, optional bandpass filter **312** and optional bandpass filter **502** are located between the respective focusing lens and target **214** (not shown). In another embodiment, bandpass filter **504** may be coupled to detector element **316.**

FIGS. 6-8 provide a visual appreciation of the consistent, focused, and controlled spectral characteristics of the projected beam of light **106** provided by the embodiments described herein. Specifically, FIGS. 6-8 illustrate intensity profiles located at various distances from the optical assembly **204.** The effect of an axicon on the intensity profile is observable. As mentioned above, embodiments employing an axicon also employ a collimating lens for first focusing lens **220.**

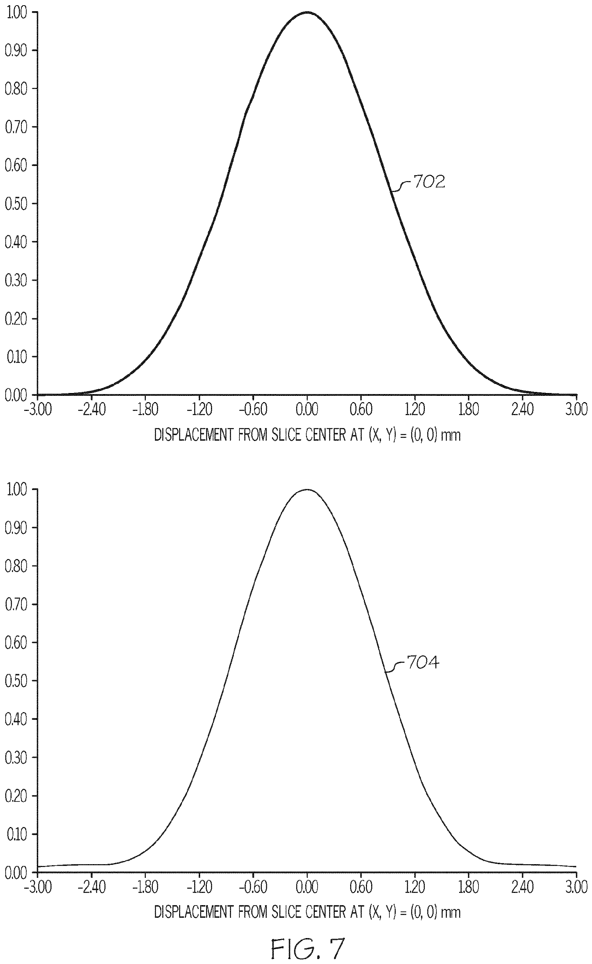

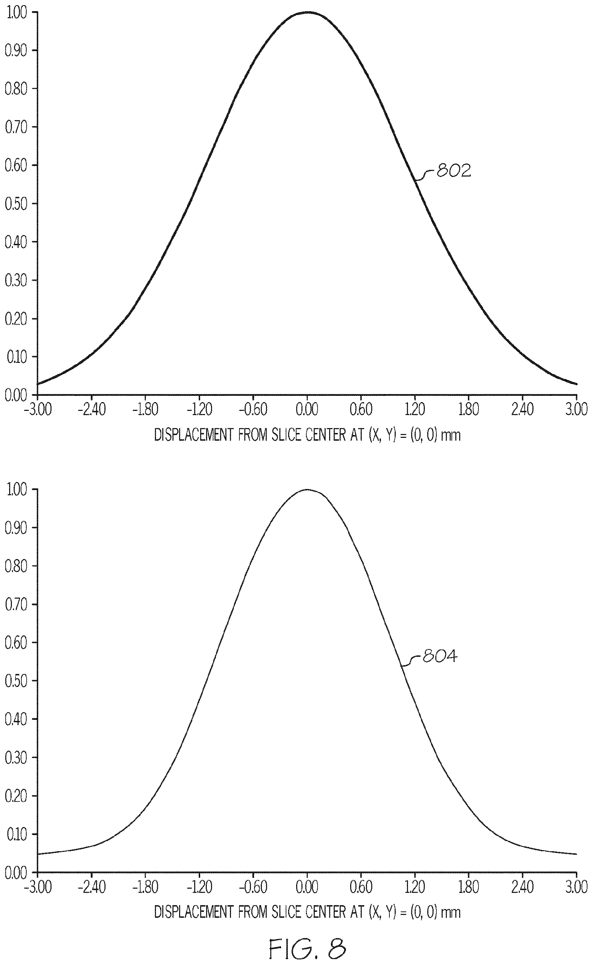

FIG. 6 is an intensity profile comparison at 5 meters. In FIG. 6, the spot on the target is located 5 meters from the optical assembly **204.** The intensity profile shown in signal **602** is an embodiment that does not employ an axicon and the intensity profile shown in signal **604** does employ an axicon. FIG. 7 is an intensity profile comparison at 10 meters. In FIG. 7, the spot on the target is located 10 meters from the optical assembly **204.** The intensity profile shown in signal **702** is an embodiment that does not employ an axicon and the intensity profile shown in signal **704** does employ an axicon. FIG. 8 is an intensity profile comparison at 12 meters. In FIG. 8, the spot on the target is located 12 meters from the optical assembly **204.** The intensity profile shown in signal **802** is an embodiment that does not employ an axicon and the intensity profile shown in signal **804** does employ an axicon.

Thus, an improved rotorcraft blade tracking system and method is provided. The provided blade tracking system and method projects a focused beam of light with minimal variance in predetermined spectral characteristics at the ranges of distance suitable for rotorcraft blade tracking applications. The provided system and method detects a reflected beam of light that is associated with the projected focused beam of light. The provided system and method maintains eye safety, and performs consistently over a variety of environmental conditions.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

## Claims

1. A blade tracking system for a rotorcraft (100), the system comprising:
a laser light source (202) configured to be
mounted on the rotorcraft (100) and configured to generate a projected beam of light (106) sufficient to impinge on a target (110) on a blade (102) of the rotorcraft, the target (110) separated by a predetermined distance from the light source;
an optical assembly (204) configured to cooperate with the light source (202) to
(i) direct the projected beam of light toward the target, and
(ii) produce the projected beam of light, such that the projected beam of light has predetermined spectral characteristics along a predetermined range of distances (208) from the optical assembly, the predetermined distance being within the predetermined range of distances, and the predetermined characteristics comprising (a) predetermined wavelength, (b) predetermined spatial extent, (c) predetermined aperture, and (d) predetermined divergence; and
a detector (216) coupled to the light source and the optical assembly and configured to distinguish a reflected beam of light (108) associated with the projected beam of light (106), from among other wavelengths of light; and
a processor (250) coupled to the source of light (202) and the detector (216), the processor configured to process data received from the source of laser light (202) and data received from the detector (216), including relational information between the projected beam of light (106) and the reflected beam of light (108), generate and receive system commands for the rotorcraft in response to at least the relational information, and control the laser light source.

2. The blade tracking system of Claim 1, wherein the predetermined spectral characteristics comprise a spot that is a substantially circular area having a diameter within a range of from about 2 millimeters to about 5 millimeters.

3. The blade tracking system of Claim 2, further comprising a bandpass filter (206, 312) coupled to at least one of (i) the optical assembly and (ii) the detector, and configured to pass the reflected beam of light.

4. The blade tracking system of Claim 1, wherein the optical assembly comprises a collimating lens (302), and further comprising an axicon (308) coupled to the optical assembly and configured to cooperate with the collimating lens directing the projected beam of light toward the target and focusing the projected beam of light, such that it provides predetermined spectral characteristics along the predetermined range of distances.

5. The blade tracking system of Claim 4, wherein the optical assembly further comprises a first folding element (306) and a second folding element (304); and wherein the first folding element and the second folding element are configured to redirect the projected beam of light.

6. A processor implemented method for tracking a blade (102) on a rotorcraft (100), the method comprising:
generating, by a laser light source (202), a projected beam of light (106);
redirecting, by an optical assembly (204), the projected beam of light (106) toward a target (110) located on a blade (102) of the rotorcraft (100) that is between 4 meters and 12 meters from the light source;
producing the projected beam of light (106) such that the projected beam of light (106) has predetermined spectral characteristics between 4 meters and 12 meters from the light source (202), the predetermined characteristics comprising (i) predetermined wavelength, (ii) predetermined spatial extent, (iii) predetermined aperture, and (iv) predetermined divergence;
distinguishing, by a detector (216), a reflected beam of light (108) associated with the projected beam of light (106) from among other wavelengths of light; and
processing data received from the source of laser light (202) and data received from the detector (216), including relational information between the projected beam of light (106) and the reflected beam of light (108), generate and receive system commands for the rotorcraft in response to at least the relational information, and control the laser light source.

7. The method of Claim 6, wherein producing the projected beam of light comprises defining a spot on the target, the spot having a diameter of substantially 3 millimeters.

## Patentansprüche

1. Blattverfolgungssystem für einen Drehflügler (100), wobei das System umfasst:
eine Laserlichtquelle (202), die konfiguriert ist, um auf dem Drehflügler (100) montiert zu werden, und konfiguriert ist, um einen projizierten Lichtstrahl (106) zu erzeugen, der ausreicht, um auf ein Ziel (110) auf einem Blatt (102) des Drehflüglers zu treffen, wobei das Ziel (110) durch einen vorbestimmten Abstand von der Lichtquelle getrennt ist;
eine optische Anordnung (204), die konfiguriert ist, um mit der Lichtquelle (202) zusammenzuarbeiten, um
(i) den projizierten Lichtstrahl auf das Ziel auszurichten und
(ii) den projizierten Lichtstrahl derart zu erzeugen, dass der projizierte Lichtstrahl vorbestimmte spektrale Eigenschaften entlang eines vorbestimmten Bereichs von Abständen (208) von der optischen Anordnung aufweist, wobei der vorbestimmte Abstand innerhalb des vorbestimmten Bereichs von Abständen liegt und die vorbestimmten Eigenschaften (a) eine vorbestimmte Wellenlänge, (b) eine vorbestimmte räumliche Ausdehnung, (c) eine vorbestimmte Apertur und (d) eine vorbestimmte Divergenz umfassen; und
einen Detektor (216), der mit der Lichtquelle und der optischen Anordnung gekoppelt und konfiguriert ist, um einen reflektierten Lichtstrahl (108), der dem projizierten Lichtstrahl (106) zugeordnet ist, von anderen Lichtwellenlängen zu unterscheiden; und
einen Prozessor (250), der mit der Lichtquelle (202) und dem Detektor (216) gekoppelt ist, wobei der Prozessor konfiguriert ist, um von der Laserlichtquelle (202) empfangene Daten und vom Detektor (216) empfangene Daten, einschließlich relationaler Informationen zwischen dem projizierten Lichtstrahl (106) und dem reflektierten Lichtstrahl (108), zu verarbeiten, Systembefehle für den Drehflügler als Reaktion auf mindestens die relationalen Informationen zu erzeugen und die Laserlichtquelle zu steuern.

2. Blattverfolgungssystem nach Anspruch 1, wobei die vorbestimmten spektralen Eigenschaften einen Punkt umfassen, der eine im Wesentlichen kreisförmige Fläche mit einem Durchmesser in einem Bereich von etwa 2 Millimetern bis etwa 5 Millimetern ist.

3. Blattverfolgungssystem nach Anspruch 2, ferner umfassend ein Bandpassfilter (206, 312), das mit mindestens einem von (i) der optischen Anordnung und (ii) dem Detektor gekoppelt ist und konfiguriert ist, um den reflektierten Lichtstrahl durchzulassen.

4. Blattverfolgungssystem nach Anspruch 1, wobei die optische Anordnung eine Kollimationslinse (302) umfasst und ferner ein Axikon (308) umfasst, das mit der optischen Anordnung gekoppelt und konfiguriert ist, um mit der Kollimationslinse zusammenzuarbeiten und den projizierten Lichtstrahl auf das Ziel zu richten und den projizierten Lichtstrahl zu fokussieren, so dass er vorbestimmte spektrale Eigenschaften entlang des vorbestimmten Bereichs von Abständen bereitstellt.

5. Blattverfolgungssystem nach Anspruch 4, wobei die optische Anordnung ferner ein erstes Klappelement (306) und ein zweites Klappelement (304) umfasst; und wobei das erste Klappelement und das zweite Klappelement konfiguriert sind, um den projizierten Lichtstrahl umzulenken.

6. Prozessorimplementiertes Verfahren zum Verfolgen eines Blatts (102) auf einem Drehflügler (100), wobei das Verfahren umfasst:
Erzeugen eines projizierten Lichtstrahls (106) durch eine Laserlichtquelle (202);
Umlenken des projizierten Lichtstrahls (106) durch eine optische Anordnung (204) auf ein Ziel (110), das sich auf einem Blatt (102) des Drehflüglers (100) befindet, das zwischen 4 Metern und 12 Metern von der Lichtquelle entfernt ist;
Erzeugen des projizierten Lichtstrahls (106) derart, dass der projizierte Lichtstrahl (106) vorbestimmte spektrale Eigenschaften zwischen 4 Metern und 12 Metern von der Lichtquelle (202) aufweist, wobei die vorbestimmten Eigenschaften (i) eine vorbestimmte Wellenlänge, (ii) eine vorbestimmte räumliche Ausdehnung, (iii) eine vorbestimmte Apertur und (iv) eine vorbestimmte Divergenz umfassen;
Unterscheiden eines dem projizierten Lichtstrahl (106) zugeordneten reflektierten Lichtstrahls (108) durch einen Detektor (216) von anderen Wellenlängen von Licht; und
Verarbeiten von Daten, die von der Laserlichtquelle (202) empfangen werden, und Daten, die vom Detektor (216) empfangen werden, einschließlich relationaler Informationen zwischen dem projizierten Lichtstrahl (106) und dem reflektierten Lichtstrahl (108), Erzeugen und Empfangen von Systembefehlen für den Drehflügler als Reaktion auf mindestens die relationalen Informationen und Steuern der Laserlichtquelle.

7. Verfahren nach Anspruch 6, wobei das Erzeugen des projizierten Lichtstrahls das Definieren eines Punkts auf dem Ziel umfasst, wobei der Punkt einen Durchmesser von im Wesentlichen 3 Millimetern aufweist.

## Revendications

1. Système de suivi de pale destiné à un giravion (100), le système comprenant :
une source de lumière laser (202), conçue pour être montée sur le giravion (100) et conçue pour générer un faisceau projeté de lumière (106) suffisant pour frapper une cible (110) sur une pale (102) du giravion, la cible (110) étant séparée d'une distance prédéfinie de la source de lumière ;
un ensemble optique (204), conçu pour coopérer avec la source de lumière (202) pour
(i) diriger le faisceau projeté de lumière vers la cible et
(ii) produire le faisceau projeté de lumière, de sorte que le faisceau projeté de lumière présente des caractéristiques spectrales prédéfinies le long d'une plage prédéfinie de distances (208) à partir de l'ensemble optique, la distance prédéfinie étant dans la plage prédéfinie de distances et les caractéristiques prédéfinies comprenant (a) une longueur d'onde prédéfinie, (b) une étendue spatiale prédéfinie, (c) une ouverture prédéfinie et (d) une divergence prédéfinie ; et
un détecteur (216), couplé à la source de lumière et à l'ensemble optique et conçu pour distinguer un faisceau réfléchi de lumière (108) associé au faisceau projeté de lumière (106), parmi d'autres longueurs d'onde de lumière ; et
un processeur (250) couplé à la source de lumière (202) et au détecteur (216), le processeur étant configuré pour traiter les données reçues de la source de lumière laser (202) et les données reçues du détecteur (216), y compris les informations relationnelles entre le faisceau projeté de lumière (106) et le faisceau réfléchi de lumière (108), pour générer et pour recevoir des commandes système pour le giravion en réponse au moins aux informations relationnelles et pour commander la source de lumière laser.

2. Système de suivi de pale selon la revendication 1, dans lequel les caractéristiques spectrales prédéfinies comprennent un point qui est une zone sensiblement circulaire de diamètre compris dans une plage d'environ 2 millimètres à environ 5 millimètres.

3. Système de suivi de pale selon la revendication 2, comprenant en outre un filtre passe-bande (206, 312) couplé (i) à l'ensemble optique et/ou (ii) au détecteur, et conçu pour faire passer le faisceau réfléchi de lumière.

4. Système de suivi de pale selon la revendication 1, dans lequel l'ensemble optique comprend une lentille de collimation (302) et comprend en outre un axicon (308), couplé à l'ensemble optique et conçu pour coopérer avec la lentille de collimation en dirigeant le faisceau projeté de lumière vers la cible et en focaliser le faisceau projeté de lumière, de sorte qu'il fournisse des caractéristiques spectrales prédéfinies le long de la plage prédéfinie de distances.

5. Système de suivi de pale selon la revendication 4, dans lequel l'ensemble optique comprend en outre un premier élément de pliage (306) et un second élément de pliage (304) ; et dans lequel le premier élément de pliage et le second élément de pliage sont conçus pour rediriger le faisceau projeté de lumière.

6. Procédé mis en oeuvre par processeur pour suivre une pale (102) sur un giravion (100), le procédé comprenant :
la production, par une source de lumière laser (202), d'un faisceau projeté de lumière (106) ;
la redirection, par un ensemble optique (204), du faisceau projeté de lumière (106) vers une cible (110) située sur une pale (102) du giravion (100), située entre 4 mètres et 12 mètres de la source de lumière ;
la production du faisceau projeté de lumière (106) de sorte que le faisceau projeté de lumière (106) présente des caractéristiques spectrales prédéfinies entre 4 mètres et 12 mètres de la source de lumière (202), les caractéristiques prédéfinies comprenant (i) une longueur d'onde prédéfinie, (ii) une étendue spatiale prédéfinie, (iii) une ouverture prédéfinie et (iv) une divergence prédéfinie ;
la distinction, par un détecteur (216), d'un faisceau réfléchi de lumière (108) associé au faisceau projeté de lumière (106) parmi d'autres longueurs d'onde de lumière ; et
le traitement des données reçues de la source de lumière laser (202) et des données reçues du détecteur (216), y compris les informations relationnelles entre le faisceau projeté de lumière (106) et le faisceau réfléchi de lumière (108), pour générer et pour recevoir des commandes de système destinées au giravion, en réponse au moins aux informations relationnelles, et pour commander la source de lumière laser.

7. Procédé selon la revendication 6, dans lequel la production du faisceau projeté de lumière comprend la définition d'un point sur la cible, le diamètre du point valant sensiblement 3 millimètres.
